(19) Europäisches Patentamt
European Patent Office
Office européen des brevets

(11) Veröffentlichungsnummer : **0 328 768 B1**

(12) # EUROPÄISCHE PATENTSCHRIFT

(45) Veröffentlichungstag der Patentschrift :
**07.08.91 Patentblatt 91/32**

(51) Int. Cl.$^5$ : **B01J 2/00,** C01B 15/12

(21) Anmeldenummer : **88121063.7**

(22) Anmeldetag : **16.12.88**

(54) **Kontinuierliches Verfahren zur Herstellung von Natriumperborat-Granulaten.**

(30) Priorität : **13.02.88 DE 3804509**

(43) Veröffentlichungstag der Anmeldung :
**23.08.89 Patentblatt 89/34**

(45) Bekanntmachung des Hinweises auf die Patenterteilung :
**07.08.91 Patentblatt 91/32**

(84) Benannte Vertragsstaaten :
**AT BE CH DE ES FR GB GR IT LI LU NL SE**

(56) Entgegenhaltungen :
**DE-A- 3 505 158**

(73) Patentinhaber : **DEGUSSA AKTIENGESELLSCHAFT**
**Weissfrauenstrasse 9**
**W-6000 Frankfurt 11 (DE)**

(72) Erfinder : **Bertsch-Frank, Birgit, Dr.**
**Grünaustrasse 15**
**W-6450 Hanau (DE)**
Erfinder : **Müller, Klaus, Dr.**
**Grünaustrasse 15**
**W-6450 Hanau (DE)**
Erfinder : **Lieser, Thomas, Dr.**
**Fürstenbergstrasse 4**
**W-6450 Hanau (DE)**

**EP 0 328 768 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft ein kontinuierliches Verfahren zur Herstellung von Natriumperborat-Granulaten mit einem Aktivsauerstoffgehalt über 10 Gew.-%, insbesondere Natriumperborat-monohydrat-Granulaten mit einem Aktivsauerstoffgehalt von etwa 14 bis 16 Gew.-%, durch Versprühen einer Wasserstoffperoxid und Natriummetaborat enthaltenden wäßrigen Lösung in einen Sprühtrockner und unmittelbar anschließendes Granulieren der Primärpartikel.

Natriumperborat findet sowohl in Form des sogenannten Tetrahydrats als auch in Form des sog. Monohydrats Anwendung in Wasch-, Bleich- und Reinigungsmitteln. Unter Natriumperboraten werden nachfolgend Produkte mit der typischen 6-Ring-Struktur verstanden :

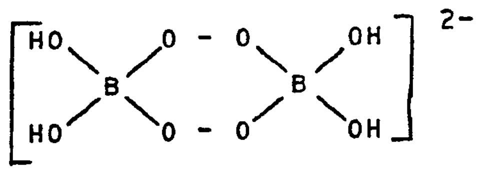

$2\ Na^+ \cdot x\ H_2O$

x = Mol Kristallwasser pro Moleküleinheit

Bei x = 0 handelt es sich um das sog. Natriumperborat-monohydrat, bei x = 4 um das sog. Natriumperborat-trihydrat und bei x = 6 um das sog. Natriumperborat-tetrahydrat. Die oben und auch nachfolgend verwendeten Bezeichnungen für die unterschiedlichen Perborate entsprechen zwar nicht der Nomenklatur, sie haben sich aber in der Technik durchgesetzt.

Für die Auswahl eines Perborats für einen konkreten Einsatzzweck, beispielsweise als alleiniges Bleichmittel oder in Kombination mit Aktivatoren oder Peroxycarbonsäuren, spielen außer dem Aktivsauerstoffgehalt die äußere Form, die Oberflächenbeschaffenheit, das Kornspektrum, die Schüttdichte, die Lagerstabilität sowie die Lösegeschwindigkeit eine wichtige Rolle. Zahlreiche Verfahren richten sich demgemäß darauf, die genannten Parameter durch das Herstellungsverfahren zu beeinflussen.

Natriumperborat-tetrahydrat wird üblicherweise durch Umsetzung von Wasserstoffperoxid mit Natriummetaborat in wäßriger Phase und Kristallisation hergestellt. Natriumperborate mit einem Aktivsauerstoffgehalt ($O_a$) von über 10,4 Gew.-%, insbesondere Natriumperborat-monohydrat mit einem $O_a$-Gehalt von etwa 15 bis 16 Gew.-%, sind entweder durch Dehydratisierung von Perborat-tetrahydrat oder durch Trocknung einer fein verteilten wäßrigen Lösung, welche Wasserstoffperoxid und Natriummetaborat enthält, zugänglich.

Die Herstellung von Natriumperborat-monohydrat durch Dehydratisieren von Natriumperborat-tetrahydrat wird zwar technisch praktiziert, ist aber aufwendig, weil zwei Stufen erforderlich sind, nämlich die Herstellung und Isolierung des Tetrahydrats sowie die Dehydratisierung desselben. Die Dehydratisierungsbedingungen müssen jeweils den gewünschten Eigenschaften des Perborat-monohydrats angepaßt werden ; der Energiebedarf und/oder die Raum-Zeit-Ausbeute sind dabei unbefriedigend.

Es wurde daher schon versucht, Natriumperborat mit einem Aktivsauerstoffgehalt über 10,4 Gew.-% auf direktem Wege, das heißt, ohne zunächst das Perborat-tetrahydrat herzustellen, zu gewinnen.

Die DE-AS 1792273 lehrt ein Verfahren zur Herstellung von Alkaliperboraten, besonders von kristallwasserarmen Produkten mit entsprechend hohen Aktivsauerstoffgehalten, durch Umsetzung von geeigneten Alkaliverbindungen mit einem Träger für Aktivsauerstoff und Sprühtrocknung, wobei der Aktivsauerstoffträger dem Sprühansatz unmittelbar vor dem Zerstäuben zugeführt wird. Versprüht und getrocknet wird vorzugsweise eine Wasserstoffperoxid und Natriummetaborat enthaltende wäßrige Lösung. Nach diesem Verfahren hergestellte Produkte mit einem $O_a$-Gehalt um 15 Gew.-% sind im allgemeinen sehr feinpulverig. Wegen des unvermeidbaren Staubens bei der Handhabung ist ihr Einsatz in Waschmitteln erschwert. Die Stoffparameter entsprechen nicht mehr den heute an Perborate gestellten Anforderungen.

Auf dem gleichen Prinzip, nämlich der Sprühtrocknung einer $H_2O_2$ und Na-Metaborat enthaltenden Lösung oder Suspension beruht das Verfahren gemäß DE-OS 3505158. Die Konzentration an Borat, berechnet als $B_2O_3$, im Sprühansatz ist auf 90-130 g/l begrenzt und das molare Verhältnis von $H_2O_2$ zu $B_2O_3$ beträgt 2,0 : 1 bis 4,2 : 1. Bei einer Ablufttemperatur im Sprühtrockner von 55 bis 120°C, vorzugsweise 60 bis 95°C, erhält man ein Natriumperborat mit einem Aktivsauerstoffgehalt von über 16 Gew.-%.

Die Partikelgröße liegt insbesondere im Bereich von 10 bis 20 µm ; die Partikel sind ferner amorph ; das Schüttgewicht liegt im Bereich von 0,2 bis 0,4 g/ml. Wie bei dem älteren zuvor gewürdigten Verfahren erschwert die Feinteiligkeit des Produktes die Anwendbarkeit. Insbesondere ist zusätzlich die Lösegeschwindigkeit im Vergleich zu Perborat-monohydrat erheblich herabgesetzt : die Partikel bleiben in Wasser in der Schwebe oder

sammeln sich gar an der Oberfläche an. In der Praxis sind dies Eigenschaften, welche einen störungsfreien Einsatz als Bleichmittel in Waschmitteln infragestellen.

Ein Aufbau der feinen Partikel zu Granulaten mit 100 bis 300 μm Durchmesser ist zwar möglich — ein Verfahren hierzu läßt sich der DE-OS 3505158 nicht entnehmen — die aufgezeigten Nachteile werden dadurch aber nicht behoben.

Aus der DE-PS 2650225 ist ein Verfahren zur Herstellung von granulatförmigem Natriumperborat-monohydrat bekannt, wobei eine 5 bis 75 Gew.-% Wasserstoffperoxid enthaltende wäßrige Lösung und eine 5 bis 40 Gew.-% Natriummetaborat enthaltende wäßrige Lösung in einen Wirbelschichttrockner, welcher Keime bei einer Wirbelschichttemperatur bis 100°C enthält, versprüht und das Wasser mit dem verwirbelnden Gas verdampft. Bei diesem Verfahren muß das in der Wirbelschicht erzeugte Produkt gesiebt, gegebenenfalls sogar mechanisch zerkleinert werden, und das Perborat-monohydrat mit kleineren Dimensionen als das herzustellende wird rezykliert. Der hohe Energieaufwand, das zunächst erhaltene ungünstige Kornspektrum, das eine Zerkleinerung erfordert, sowie das ständige Rezyklieren von Keimen werden als nachteilig empfunden.

Ausgehend von sehr feinteiligen, beispielsweise gemäß DE-AS 1792273 oder DE-OS 3505158 hergestellten Perboraten können Granulationsverfahren zum Aufbau von groberen, in Waschmitteln einsetzbaren Produkten in Betracht gezogen werden. Gerade bei der Granulation von Perboraten ist aber der Erfolg nicht vorhersehbar. So wurde in der DE-PS 1037432 zwar Perborat-tetrahydrat mit einer Korngröße von 0,05 bis 0,3 mm durch mechanische Einwirkung der Partikel aufeinander in Gegenwart von anhaftendem Wasser und gegebenenfalls Bindemitteln granuliert, jedoch mußten eine Wärmebehandlung angeschlossen und vorzugsweise "sprengend" wirkende Bindemittel eingesetzt werden, um die Lösegeschwindigkeit nicht durch die Granulation nachteilig zu beeinflussen. Es wird zwar in dieser Patentschrift auch auf die Möglichkeit hingewiesen, andere Perborathydrate einzusetzen ; Beispiele oder gar Anregungen, wie Natriumperborat-monohydrat mit einem durchschnittlichen Korndurchmesser von etwa 5 bis etwa 50 μm in technisch einfacher Weise in befriedigend abriebfeste Granulate mit hoher Lösegeschwindigkeit überführt werden kann, werden nicht gegeben.

Daß eine Granulation von Natriumperborat-monohydrat unter üblichen Granulierbedingungen keineswegs selbstverständlich ist, folgt aus der US-PS 4,002,434 : Natriumperborat-monohydrat wird mit Wasser oder wäßrigen Lösungen bei 20-90°C befeuchtet und in einem Wirbelschichttrockner, eine für Granulationen übliche Vorrichtung, getrocknet. Durch diese Maßnahme wird zwar der Abrieb verbessert, Hinweise auf eine gleichzeitig stattfindende Granulation lassen sich diesem Dokument aber nicht entnehmen.

In der DE-PS 2652488 wird ein Verfahren zur Herstellung von Granulaten aus Zeolithen und sauerstoffabgebenden Verbindungen gelehrt. Zwar wird auch Natriumperoxoborat genannt ; dieses wird aber als zentrifugenfeuchtes Produkt eingesetzt. Hinweise auf die Herstellung von sprühgetrockneten amorphen Perboraten und deren Granulation sind diesem Dokument nicht zu entnehmen. Ferner beschränken die Produkte gemäß DE-PS 2652488 den Einsatz des darin enthaltenen Peroxoborats.

Aufgrund der unbefriedigenden Eigenschaften der durch Sprühtrocknung zugänglichen Natriumperborate sowie der mit einer separaten Granulation von sehr feinteiligen, zunächst isolierten Partikeln zu erwartenden Probleme, lag es nicht nahe, diese Verfahrensschritte in Erwartung von in Wasch- und Bleichmitteln gut einsetzbaren Natriumperborat-Granulaten miteinander zu kombinieren.

Aufgabe der Erfindung ist es, ein technisch einfaches Verfahren zur kontinuierlichen Herstellung von Natriumperborat-Granulaten mit einem $O_a$-Gehalt über 10 Gew.-%, vorzugsweise Natriumperborat-monohydrat-Granulaten mit 14 bis 16 Gew.-% $O_a$, zu schaffen, das eine direkte Herstellung von Primärpartikeln durch Sprühtrocknung einer wäßrigen Lösung umfaßt. Das Verfahren sollte es gestatten, mit hoher Aktivsauerstoffausbeute lagerstabile und als Bleichmittel gut wirksame Granulate zu erhalten sowie das Schüttgewicht, die Kornverteilung und Lösegeschwindigkeit der Granulate sicher einzustellen.

Die Aufgabe wird gelöst durch ein kontinuierliches Verfahren zur Herstellung von Natriumperborat-Granulaten mit einem $O_a$-Gehalt über 10 Gew.-%, vorzugsweise 14 bis 16 Gew.-%, durch Versprühen einer Wasserstoffperoxid und Natriummetaborat enthaltenden wäßrigen Lösung und Trocknen der versprühten Tröpfchen mittels eines erhitzten Gases, das dadurch gekennzeichnet ist, daß man die Primärpartikel unmittelbar nach Verlassen der Trocknungszone einer Granuliervorrichtung zuführt und in Gegenwart von freiem und/oder Perborat-Kristallwasser granuliert und, falls erforderlich, die Granulate trocknet.

Erfindungswesentlich ist, daß die Primärpartikel, hierunter werden die durch Sprühtrocknung erhaltenen im wesentlichen festen Teilchen verstanden, unmittelbar nach Verlassen der Trocknungszone des Sprühtrockners einer Granuliervorrichtung zugeführt werden. Durch diese Maßnahme gelingt es, Granulate mit den erwünschten Eigenschaften zu erhalten, ohne daß es der Isolierung der Primärpartikel bedarf. Ein wesentlicher Vorteil des Verfahrens besteht darin, daß es zu keiner Staubbelästigung durch das zunächst gebildete, sehr feine Produkt kommt.

Unter unmittelbar wird verstanden, daß die die Trocknungszone verlassenden Primärteilchen ohne nennenswerte Abkühlung und ohne Zwischenlagerung der Granuliervorrichtung zugeführt werden. Diese Verfahrensweise ist aus energetischer Sicht vorteilhaft und schafft günstige Voraussetzungen für die Granulation.

Überraschenderweise werden durch die erfindungsgemäß durchgeführte Granulation die zunächst im allgemeinen amorphen Primärteilchen in zumindest teilweise kristallisierte Granulate überführt. Der Kristallinitätsgrad wird sowohl von den Verfahrensbedingungen, wie Temperatur und Verweilzeit, als auch davon bestimmt, in welcher Menge und welcher Art das erforderliche Wasser zugegen ist. Durch Messung der Intensitätsverteilung von Röntgenbeugungsaufnahmen von Pulvern läßt sich in bekannter Weise eine Aussage machen, ob und in welchem Umfang das untersuchte Produkt kristallin ist. Durch die Granulation wird darüber hinaus auch die Lagerstabilität bei Lagerung in warm-feuchter Atmosphäre signifikant erhöht. Bei der Granulation handelt es sich somit offensichtlich nicht nur um den Aufbau größerer Teilchen, sondern gleichzeitig wird das Eigenschaftsbild des Perborats wesentlich verändert und damit für den praktischen Einsatz in Wasch- und Reinigungsmitteln geeignet. Ein nach DE-PS 1792273 hergestelltes sprühgetrocknetes Perboratmonohydrat mit einem Aktivsauerstoffgehalt von 15 Gew.-% verliert schon innerhalb weniger Tage bis zu 10% (relativ) seines Gehaltes ; erfindungsgemäß hergestellte Natriumperborat-monohydrat-Granulate verlieren demgegenüber unter gleichen Lagerbedingungen innerhalb 6-wöchiger Lagerung im allgemeinen unter 5% (relativ) des Ausgangsgehaltes.

Üblicherweise liegt der Durchmesser der sprühgetrockneten Primärteilchen im Bereich von etwa 5 bis 50 µm. Die Korngröße und Kornverteilung der Granulate lassen sich in weiten Grenzen variieren ; wichtige Einflußgrößen sind dabei der Feuchtegehalt des Systems, die Temperatur, die Verweilzeit in der Granuliervorrichtung, die Verdichtungswirkung derselben sowie Art und Menge von ggf. anwesenden Granulierhilfsmitteln. Im allgemeinen wird die Granulierung so geführt, daß der Staubanteil (unter 0,1 mm) und Grobanteil (größer 0,5 mm) jeweils unter 5 Gew.-%, vorzugsweise unter 2 Gew.-%, des Granulats liegt. Der Fachmann wird die Bedingungen durch Vorversuche ermitteln. Es versteht sich, daß der Staubanteil nach Abtrennung vom Granulat in die Granulierstufe zurückgeführt werden kann und auch der Grobanteil verwertbar ist.

Die Schüttdichte des Granulats hängt außer vom Kornspektrum auch von der Verdichtung während der Granulation ab. Bei Verwendung einer wenig verdichtenden Granuliervorrichtung, hierzu gehört die Granulierung in einer fluidisierten Schicht, erhält man ein Granulat niedrigerer Schüttdichte, also beispielsweise eine solche im Bereich von 0,3 bis 0,6 g/ml. Mittels einer höher verdichtenden Granuliervorrichtung, zum Beispiel einem kontinuierlich arbeitenden Mischer oder einer Trommel mit umlaufenden Schaufeln oder Schnecken, gelangt man zu Schüttdichten von im allgemeinen 0,4 bis 1,0 g/ml.

Die Granulation der Primärpartikel erfolgt in Gegenwart von freiem und/oder Perborat-Kristallwasser. Das freie Wasser kann dem System durch Besprühen mittels feiner Sprühdüsen, welche auf das Material in der Granuliervorrichtung gerichtet sind, zugeführt werden. Es ist auch vorteilhaft, zusätzlich oder alternativ die Primärteilchen unmittelbar nach Verlassen der Trocknungszone des Sprühtrockners mit Wasser zu besprühen. Das zu versprühende Wasser kann auch übliche Granulierhilfsmittel und/oder Wasserstoffperoxid, Borsäure oder eine Natrium-Bor-Verbindung enthalten. Besonders geeignete Granulierhilfsmittel sind wäßrige Lösungen enthaltend Wasserglas, Alkaliborate und -perborate, Magnesiumsulfat, Na-Hexametaphosphat, organische Polymere, wie Stärke, Agar, Xanthan, Carboxymethylcellulose, Polyacrylate, Polyvinylalkohol oder Gemische solcher Stoffe. Der Fachmann wird die zum Besprühen notwendige Menge Wasser, die Ausrichtung und Anzahl der Sprühdüsen sowie die Menge mitzuverwendender Granulierhilfsmittel durch orientierende Versuche in der zum Sprühtrocknen und Granulieren vorgesehenen Vorrichtung ermitteln. Falls erwünscht, kann das zum Granulieren zu versprühende Wasser auch Aktivsauerstoffstabilisatoren, wie Amino- und Carboxyl- bzw. Amino- und Phosphonatgruppen enthaltende Chelatkomplexbildner, oberflächenaktive Stoffe, insbesondere nichtionische Tenside, wie Alkylbenzolpolyglykolether, sowie zur Peroxycarbonsäurebildung befähigte Bleichaktivatoren enthalten.

Anstelle die Primärteilchen mit Wasser oder einer wäßrigen Lösung zu besprühen, gelingt es auch, die Feuchtigkeit durch Einbringen eines Wasserdampf enthaltenden Gases, vorzugsweise feuchter erwärmter Luft, zur Verfügung zu stellen. Das Besprühen und die Zufuhr feuchter Luft können auch miteinander kombiniert werden. Vorteilhafterweise verwendet man als feuchte erwärmte Luft einen Teil der mit mittlerer Temperatur, also etwa 50 bis etwa 100°C, vorzugsweise etwa 60 bis 90°C, den Sprühtrockner verlassenden Trocknungsluft, welche gegebenenfalls weiter befeuchtet werden kann.

Wie bereits beschrieben wurde, kann die Granulation auch in Gegenwart von Perborat-Kristallwasser erfolgen. Somit sind kristallwasserhaltige Perborate gemäß der eingangs angegebenen Formel mit x größer Null, vorzugsweise 4 bis 6, zugegen. Solche Perborate können aus nicht vollständig getrocknetem versprühten Material (Primärpartikel) resultieren. Alternativ oder zusätzlich kann auch feinverteiltes Natriumperborat-tetrahydrat oder eine Schmelze davon, die in die Granulierzone eingebracht werden, beispielsweise durch Einblasen oder mittels einer Schnecke oder durch Versprühen, als Quelle für Wasser dienen. Bei dieser Ausführungsform wird die Temperatur des sich in der Granulierzone befindlichen Materials vorzugsweise auf Werte um oder knapp über dem Schmelzpunkt von Natriumperborat-tetrahydrat, bevorzugt etwa 60 bis 75°C,

eingestellt. Das die Trocknungszone des Sprühtrockners verlassende Material kommt in der Granulierzone in innigen Kontakt mit noch Kristallwasser enthaltenden Primärpartikeln und/ oder zugesetztem Tetrahydrat. Hierbei kommt es unter den genannten Temperaturbedingungen zu Schmelzvorgängen, wodurch die Granulation ermöglicht wird und gegebenenfalls auch eine Entwässerung anwesenden Tetrahydrats zum Monohydrat stattfindet. Selbstverständlich hängt die Zusammensetzung des Granulats sowohl von der chemischen Zusammensetzung der die Trocknungszone des Sprühtrockners verlassenden Primärpartikel als auch dem Mengenverhältnis Primärpartikel zu zugeführtem Tetrahydrat und/oder Wasser sowie der Temperatur und Verweilzeit in der Granuliervorrichtung ab. Die Wärme in der Granulierzone wird durch die Primärpartikel und ggf. mittels erwärmter Luft, vorzugsweise Luft mit einem rel. Feuchtegehalt über 50%, und/oder mittels Kontaktheizung zugeführt. Das innige miteinander Inkontaktbringen des zu granulierenden Materials mit der Feuchte und-/oder einem kristallwasserhaltigen Perborat erfolgt, wie oben gesagt, vorzugsweise in einem fluidisierten Bett oder/und einer verdichtenden Granuliervorrichtung.

Bisher war nicht bekannt, sehr feines Natriumperborat-monohydrat in Gegenwart bzw. durch Zusatz von Natriumperborat-tetrahydrat zu granulieren und dabei ein hinsichtlich Kornspektrum und Lagerstabilität ausgezeichnetes Granulat zu erhalten.

Sofern als Granuliervorrichtung ein sog. Wirbelbett mit Anströmboden verwendet wird, eignet sich Luft als Fluidisierungsgas. Die Temperatur der Luft beträgt im allgemeinen 60 bis 130°C und vorzugsweise 60 bis 90°C, wenn Natriumperborat-monohydrat-Granulat hergestellt werden soll. Die Wirbelbettvorrichtung weist eine übliche Bauart auf und ist mittels eines Überlaufwehrs und einer Abzugsvorrichtung für das Granulat für den kontinuierlichen Betrieb ausgestattet. Die Abluft kann gemeinsam oder getrennt mit derjenigen des Sprühtrockners abgeführt und vom Staub mittels Staubabscheidern, wie Zyklonen, gereinigt werden. Bei Verwendung eines Wirbelbetts zum Granulieren empfiehlt sich der Einsatz eines Granulierhilfsmittels, das als wäßrige Lösung auf die Primärpartikel gesprüht wird. Bezogen auf das Endprodukt führen 0,1 bis 10 Gew.-%, vorzugsweise 0,5 bis 3 Gew.-%, des Bindemittels, das im allgemeinen als 1 bis 50 gewichts-%ige wäßrige Lösung zur Anwendung kommt, zu einem ausreichenden Effekt. Natriumperborat-tetrahydrat als fest eingebrachtes Granulierhilfsmittel eignet sich besonders bei Verwendung von verdichtenden Granuliervorrichtungen.

Gemäß einer vorteilhaften Ausführungsform des erfindungsgemäßen Verfahrens verwendet man eine direkt in den Sprühtrockner integrierte Granuliervorrichtung, beispielsweise einen Sprühtrockner mit integriertem Wirbelbett.

Die Trocknungsluft des Sprühtrockners tritt üblicherweise mit 60 bis 250°C, vorzugsweise 90 bis 200°C und besonders bevorzugt mit etwa 150 bis 180°C in den Sprühtrockner ein und verläßt ihn mit 50 bis 200°C, vorzugsweise mit 50 bis 100°C und ganz besonders bevorzugt mit 60 bis 90°C.

Eingesetzt werden können Sprühtrockner üblicher Bauart, wobei des Sprühgut und die Trocknungsluft sowohl im Gleichstrom wie auch im Gegenstrom geführt werden können. Im Hinblick auf die begrenzte Temperaturstabilität von Perboraten wird eine Gleichstromführung bevorzugt. Zum Zerstäuben des zu trocknenden flüssigen Gutes kommen übliche Zerstäubungsvorrichtungen, wie Einstoff- oder Mehrstoff-Druckdüsen oder Zentrifugalzerstäuber infrage, wobei letztere bevorzugt werden. Die Betriebsbedingungen des Trockners, u.a. Temperatur der Zu- und Abluft, Luftmenge, Speisemenge, Düsenparameter, wird der Fachmann durch orientierende Versuche ermitteln, wobei die Zusammensetzung und der Feuchtegehalt der festen Primärpartikel von großem Einfluß auf die sich unmittelbar anschließende Granulierung sind. Die Verweilzeit der versprühten Partikel in der Trocknungszone des Sprühtrockners liegt üblicherweise im Bereich von wenigen Sekunden bis zu etwa 30 Sekunden. Zeitlich und bevorzugt auch räumlich unmittelbar daran schließend werden die noch warmen Primärpartikel der Granulierung zugeführt. Es ist ein Vorteil des erfindungsgemäßen Verfahrens, daß keine Keime in die Sprühzone eingebracht werden und das Granulat innerhalb des gewünschten Kornbereiches in einfacher Weise in hoher Ausbeute erhalten wird.

Die zu versprühende wäßrige Lösung enthält Wasserstoffperoxid und Natriummetaborat sowie im Gleichgewicht hiermit Natriumperborat. Auch übliche Aktivsauerstoffstabilisatoren und/oder Kristallisationsverzögerer, wie Natriumhexametaphosphat, können anwesend sein. Eine Kristallisation von Natriumperborat vor dem Versprühen der Lösung ist unerwünscht. Die Lösung wird daher im allgemeinen unmittelbar vor dem Versprühen hergestellt, und zwar durch Zusammenbringen einer wäßrigen Lösung von Wasserstoffperoxid, vorzugsweise mit einem Gehalt von 30-85 Gew.-%, mit einer wäßrigen Lösung oder Suspension von Natriummetaborat mit einem Gehalt von 15-70 Gew.-%, vorzugsweise 15-40 Gew.-%. Anstelle Natriummetaborat können auch ein anderes Natriumborat oder Borsäure gemeinsam mit der entsprechenden Menge Natriumhydroxid — das atomare Verhältnis Na : B soll etwa 1 : 1 betragen — eingesetzt werden. Das molare Verhältnis von Wasserstoffperoxid zu Natriummetaborat wird vorzugsweise auf 0,9 bis 1,1, insbesondere auf 1,0 bis 1,05 eingestellt, denn dieses Verhältnis führt erfindungsgemäß zu Perboraten mit einem $O_a$- zu Bor-Atomverhältnis um 1 und somit auch zu Natriumperborat-Granulaten mit $O_a$-Werten von etwa 10 bis 16%, insbesondere Natriumperborat-monohydrat-Granulat mit 14 bis 16 Gew.-% Aktivsauerstoff. Die bei der Herstellung der Lösung durch miteinander Inkontaktbringen der Reaktionspartner freiwerdende Reaktionsenthalpie läßt sich vorzugsweise zur Minderung des Energiebedarfes bei der Trocknung nutzen. Die Konzentration der zu versprühenden wäßrigen Lösung kann in weiten Bereichen liegen, nämlich von etwa 5 bis etwa 50 Gew.-%, berechnet als $NaBO_2$. Konzentrationen im Bereich oberhalb von etwa 40 Gew.-% werden weniger bevorzugt, und zwar wegen der hohen Viskosität. Konzentrationen unter 10 Gew.-% sind zwar möglich, die Wirtschaftlichkeit wird aber gemindert. Besonders bevorzugt für die Herstellung von Natriumperborat-monohydrat-Granulaten ist eine Konzentration zwischen 15 und 25 Gew.-%. Bei gegebenem Molverhältnis $O_a$ : Bor in der Sprühlösung wird durch die Bedingungen, insbesondere Temperatur, Feuchte und Verweilzeit, im Sprühtrockner sowie in der Granuliervorrichtung und einem ggf. nachgeschalteten Trockner der $O_a$-Gehalt des Perborat-Granulats bestimmt. Bei einer Temperatur der Primärpartikel über etwa 80°C, insbesondere bei längerer Verweilzeit, kann es zur Umwandlung des aktiven (Oa) in entwickelbaren (Oe) Sauerstoff kommen.

Die erfindungsgemäß hergestellten Granulate, insbesondere die Natriumperborat-monohydrat-Granulate lösen sich im allgemeinen sehr rasch auf. Durch Verwendung von Wasserglas als Granulierhilfsmittel wird die Lösegeschwindigkeit gegenüber auf konventionellem Wege durch Dehydratisierung von Natriumperborat-tetrahydrat erhaltenem Natriumperborat-monohydrat etwas verlangsamt. Der Abrieb der erfindungsgemäß erhaltenen Monohydrat-Granulate liegt im Bereich der marktgängigen Produkte.

Der technische Fortschritt des erfindungsgemäßen Verfahrens liegt darin, aus leicht zugänglichen Rohstoffen direkt Natriumperborat-Granulate, vorzugsweise Natriumperborat-monohydrat-Granulate herzustellen. Das Verfahren ist variabel hinsichtlich der Stoffparameter ; diese können den jeweiligen Kundenwünschen leicht angepaßt werden. Der Nachteil der unzureichenden Lagerstabilität sprühgetrockneten Natriumperborat-monohydrats konnte durch die sich erfindungsgemäß unmittelbar an die Sprühtrocknung anschließende Granulierung in Gegenwart von Wasser behoben werden.

Anhand der Beispiele wird das Verfahren weiter beleuchtet.

Beispiel 1

Die Apparatur bestand in einem Sprühtrockner mit integriertem Wirbelbett. Der im oberen Teil zylindrische (Durchmesser 1,6 m, Höhe 1,0 m), sich im unteren Teil konisch verjüngende Sprühtrockner enthielt zentral an seiner oberen Abdeckung einen Zentrifugalzerstäuber sowie die Zuführungsorgane für die Trocknungsluft ; peripher am oberen Teil angeordnet war der Abzug für die Luft sowie nachgeschaltet ein Zyklon. Direkt unter dem konisch verjüngten Teil des Sprühtrockners war eine zylindrische Wirbelbettvorrichtung mit Anströmboden (Fläche 3 $dm^2$), Überlaufwehr und Abzugsvorrichtung angeordnet. Zwischen dem Sprühtrockner und der Wirbelbettvorrichtung war eine Sprühdüse zum Eindüsen von Wasser oder einer wäßrigen Lösung von Granulierhilfsmitteln zentral angeordnet. Die Apparatur enthielt ferner Vorrichtungen zum Erwärmen und Regeln der Strömungsmenge der Luft für den Sprühtrockner und das Wirbelbett.

Die Sprühlösung wurde durch Mischen von wäßrigem Wasserstoffperoxid (70 Gew.-% $H_2O_2$) mit wäßrigem $NaBO_2$ (19,1 Gew.-%) hergestellt und mit $MgSO_4$ stabilisiert. Das Oa : B-Atomverhältnis betrug 1,0, die Konzentration der Lösung, berechnet als $NaBO_2$ 16,7 Gew.-%. Als Stabilisator enthielt die Sprühlösung ferner 0,1 Gew.-% $MgSO_4$.

Betriebsbedingungen :

| | | |
|---|---|---|
| Lufteintritt | Sprühtrockner | 180 °C |
| Luftaustritt | Sprühtrockner | 76 °C |
| Lufteintritt | Wirbelbett | 90 °C |

| | | |
|---|---|---|
| Luftmenge | Sprühtrockner | 750 kg/Std. |
| Luftmenge | Wirbelbett | 140 kg/Std. |
| Speisemenge zum Sprühtrockner | | 45 kg/Std. |
| Zerstäuber des Sprühtrockners | | 25.000 U.p.M. |
| Temperatur des Wirbelbetts | | 66 °C |
| Besprühen der Primärpartikel mit einer 35 gew.-%igen wäßrigen Wasserglaslösung ($SiO_2$ / $Na_2O$ = 3,3) in einer Menge von | | 1,7 kg/Std. |
| Produktion (gesamt) | | 12,0 kg/Std. |

Stoffdaten der erhaltenen Produkte :

a) Primärpartikel (aus dem Zyklon)

| | | |
|---|---|---|
| Korngröße | 32 - 63 µm | 36 % |
| | 20 - 32 µm | 34 % |
| | < 20 µm | 30 % |

Die Primärpartikel enthielten einen $O_a$-Gehalt von 15,6 Gew.-%. Die Primärteilchen erwiesen sich als im wesentlichen amorph, vgl. Fig. 1 der Diffraktometeraufnahme mit $CuK_\alpha$ -Strahlung im Bereich von 11°-59° (2 Theta).

b) Granulate

| | | |
|---|---|---|
| Korngröße | >0,8 mm | 5,8 % |
| | <0,1 mm | 3,7 % |
| Schüttdichte | | 480 g/l |
| $O_a$-Gehalt | | 15,1 Gew.-% |

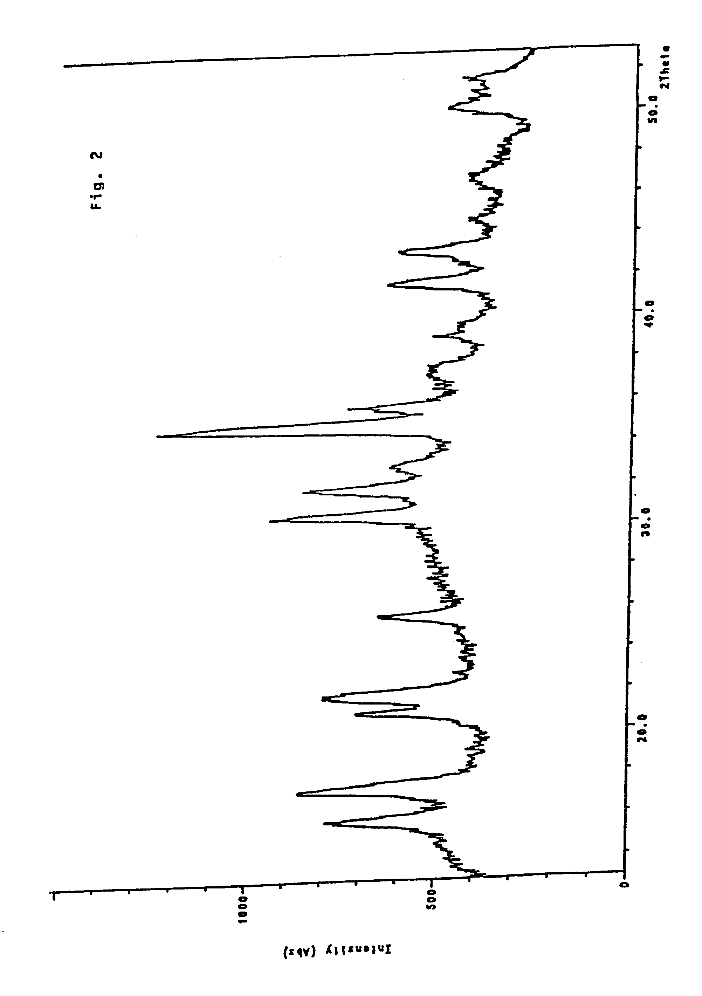

Die Granulate wiesen zumindest teilkristalline Struktur auf, vgl. Diffraktometeraufnahme mit $CuK_\alpha$ -Strahlung im Bereich von 11°-59° (2 Theta), Fig. 2.

c) Lagerstabilität : Oa-Abnahme (relativ) bei Lagerung bei 30°C und 80% rel. Luftfeuchte

| | nach 1 Woche | nach 2 Wochen | nach 6 Wochen |
|---|---|---|---|
| Primärpartikel *)<br>Granulat *)<br>(0,1-0,8 mm)<br>*) gemäß Beispiel 1 | 97,1<br>98,4 | 88,8<br>98,3 | 68,3<br>96,7 |
| zum Vergleich:<br>Natriumperborat-monohydrat, Oa 15,6 %;<br>Hergestellt durch Dehydratisierung von Natriumperborat-tetrahydrat | 95,8 | 94,2 | 94,8 |

Beispiel 2

In der Apparatur gemäß Beispiel 1 wurde eine wäßrige Lösung nachstehender Zusammensetzung in dem Sprühtrockner zerstäubt : 14,3 Gew.-% $NaBO_2$ und 7,3 Gew.-% $H_2O_2$.

Die Betriebsbedingungen entsprachen weitgehend denen des Beispiels 1, ausgenommen

| | |
|---|---|
| Speisemenge zum Sprühtrockner | 40 kg/Std. |
| Luftmenge Wirbelbett | 145 kg/Std. |
| Zuluft zum Wirbelbett | 100°C |
| Wirbelbettemperatur | 65°C |

Die Primärpartikel wurden mit 3 kg/Std. einer wäßrigen Lösung der gleichen Zusammensetzung wie die dem Sprühtrockner zugeführte Lösung besprüht. Man erhält 9,2 kg/Std. Granulat.

$O_a$-Gehalt des Granulats : 15,4 Gew.-%.

Das erhaltene Granulat wies nur 2,1 Gew.-% unter 0,1 mm und 3,4 Gew.-% über 0,8 mm auf. Die Lösegeschwindigkeit betrug 0,5 Minuten (gemessen mit 2 g/l bei 15°C). $O_a$-Abnahme (relativ) nach 6-wöchiger Lagerung bei 30°C und 80% rel. Luftfeuchte 4%.

Beispiel 3

Die Apparatur bestand aus einem Sprühtrockner und einem zylindrischen Intensivmischer mit Wirbelwerkzeug und Strahlungsheizung sowie einer Zugabevorrichtung für pulverförmiges Natriumperborat-tetrahydrat in den Einlaß des Mischers.

Durch Sprühtrocknen einer Lösung gemäß Beispiel 1, Zudosieren von festem pulverförmigen Natriumperborat-tetrahydrat — 1 Gewichtsteil pro 3 Gewichtsteile Primärpartikel — und Granulieren bei 72°C erhält man ein Granulat, das während der Granulation teilweise dehydratisiert wurde :

| | | | |
|---|---|---|---|
| Aktivsauerstoff ($O_a$) | | | 14,9 Gew.-% |
| Lösegeschwindigkeit (2 g/l bei 15 °C) | | | < 0,5 Min. |
| Schüttgewicht | | | 820 g/l |
| Kornfraktion | <0,1 mm | : | 9,7 % |
| Kornfraktion | >0,8 mm | : | 12,1 % |

## Patentansprüche

1. Kontinuierliches Verfahren zur Herstellung von Natriumperborat-Granulaten mit einem $O_a$-Gehalt über 10 Gew.-%, vorzugsweise 14 bis 16 Gew.-%, durch Versprühen einer Wasserstoffperoxid und Natriummetaborat enthaltenden wäßrigen Lösung und Trocknen der versprühten Tröpfchen mittels eines erhitzten Gases, dadurch gekennzeichnet, daß man die Primärpartikel unmittelbar nach Verlassen der Trocknungszone einer Granuliervorrichtung zuführt und in Gegenwart von freiem und/oder Perborat-Kristallwasser granuliert und, falls erforderlich, die Granulate trocknet.

2. Verfahren nach Anspruch 1, dadurch gekennzeichnet, daß man die versprühten Tröpfchen mit Luft trocknet, wobei man diese im wesentlichen im Gleichstrom mit den versprühten Flüssigkeitströpfchen führt und die Temperatur der Zuluft auf 60-250°C, vorzugsweise auf 90-200°C, und die Temperatur der Abluft auf 50-200°C, vorzugsweise auf 50-100°C, insbesondere auf 60-90°C einreguliert.

3. Verfahren nach Anspruch 1 oder 2, dadurch gekennzeichnet, daß man die Temperatur des zu granulierenden Materials in der Granuliervorrichtung auf etwa 50 bis 90°C einreguliert, wobei dies mittels auf 60 bis 130°C erwärmter Luft und/oder mittels Kontaktheizung erfolgt.

4. Verfahren nach einem oder mehreren der Ansprüche 1 bis 3, dadurch gekennzeichnet, daß man die Primärpartikel nach Verlassen der Trocknungszone mit Wasser oder eine bekannte Granulierhilfsmittel enthaltenden wäßrigen Lösung oder Schmelze besprüht und gleichzeitig oder anschließend granuliert und gegebenenfalls gleichzeitig oder anschließend den Gehalt an freiem und/oder gebundenem Wasser durch Trocknen erniedrigt.

5. Verfahren nach einem oder mehreren der Ansprüche 1 bis 4, dadurch gekennzeichnet, daß man die Primärpartikel in Gegenwart von Natriumperborat mit einem Kristallwassergehalt über 25 Gew.-% bei einer Temperatur von 50-90°C, vorzugsweise 60 bis 75°C, granuliert.

6. Verfahren nach einem oder mehreren der Ansprüche 1 bis 5, dadurch gekennzeichnet, daß man die Sprühtrocknung und Granulierung in einem Sprühtrockner mit integriertem Wirbelbett durchführt, wobei die Temperatur der Fluidisierungs-Zuluft 60-130°C, vorzugsweise 60-90°C, beträgt.

7. Verfahren nach einem oder mehreren der Ansprüche 1 bis 6, dadurch gekennzeichnet, daß man die der Sprühtrocknung zuzuführende Lösung unmittelbar vor dem Versprühen durch Zusammenbringen einer wäßrigen Wasserstoffperoxidlösung, vorzugsweise einer solchen mit einem $H_2O_2$-Gehalt zwischen 30 und 85 Gew.-%, mit einer wäßrigen Natriummetaboratlösung oder -suspension mit einem Gehalt von 15-70 Gew.-%, vorzugsweise mit 15 bis 40 Gew.-% $NaBO_2$, herstellt, wobei das Molverhältnis $H_2O_2$ : $NaBO_2$ 0,9 bis 1,1, vorzugsweise 1,0 bis 1,05, beträgt.

8. Verfahren nach einem oder mehreren der Ansprüche 1 bis 7, dadurch gekennzeichnet, daß die der Sprühtrocknung zuzuführende Lösung eine Konzentration von 5 bis 50 Gew.-%, vorzugsweise 10 bis 40 Gew.-%, Perborat, berechnet als $NaBO_2$, aufweist.

## Claims

1. A continuous process for the preparation of sodium perborate granulates having an $O_a$ content above 10% by weight, preferably from 14 to 16% by weight, by atomizing an aqueous solution containing hydrogen peroxide and sodium metaborate and drying the atomized droplets by means of a heated gas, characterised in that the primary particles are transferred to a granulating apparatus immediately on leaving the drying zone and are granulated in the presence of free water and/or perborate water of crystallisation and the granulates are dried if necessary.

2. A process according to Claim 1, characterised in that the atomized droplets are dried with air which is

carried substantially in the same direction of flow as the atomized liquid droplets and the temperature of the supplied air is adjusted to 60-250°C, preferably to 90-200°C, and the temperature of the exhaust air is adjusted to 50-200°C, preferably to 50-100°C, in particular to 60-90°C.

3. A process according to Claim 1 or Claim 2, characterised in that the temperature of the material to be granulated is adjusted to about 50 to 90°C in the granulating apparatus by means of air which has been heated to 60 to 130°C and/or by means of contact heating.

4. A process according to one or more of Claims 1 to 3, characterised in that on leaving the drying zone, the primary particles are sprayed with water or an aqueous solution or melt containing known granulating auxiliaries and granulation is carried out at the same time or thereafter and the free and/or bound water content is optionally lowered by drying at the same time or thereafter.

5. A process according to one or more of Claims 1 to 4, characterised in that the primary particles are granulated in the presence of sodium perborate having a water of crystallisation content above 25% by weight at a temperature from 50-90°C, preferably from 60 to 75°C.

6. A process according to one or more of Claims 1 to 5, characterised in that spray drying and granulation are carried out in a spray drier with integrated fluidized bed, the temperature of the supplied fluidizing air being from 60-130°C, preferably from 60-90°C.

7. A process according to one or more of Claims 1 to 6, characterised in that the solution to be spray dried is prepared immediately before atomization by bringing together an aqueous hydrogen peroxide solution, preferably one having an $H_2O_2$ content of from 30-85% by weight, and an aqueous sodium metaborate solution or suspension containing from 15-70% by weight, preferably from 15 to 40% by weight of $NaBO_2$, the molar ratio of $H_2O_2 : NaBO_2$ amounting to 0.9 to 1.1, preferably from 1.0 to 1.05.

8. A process according to one or more of Claims 1 to 7, characterised in that the solution to be spray dried has a concentration of from 5 to 50% by weight, preferably from 10 to 40% by weight, of perborate, calculated as $NaBO_2$.

## Revendications

1. Procédé en continu pour la production de granulés de perborate de sodium ayant une teneur en oxygène actif $O_a$ supérieure à 10% en poids, de préférence de 14 à 16% en poids — par pulvérisation d'une solution aqueuse contenant du peroxyde d'hydrogène et du métaborate de sodium et séchage des gouttelettes pulvérisées à l'aide d'un gaz chauffé, caractérisé en ce que l'on amène les particules primaires immédiatement après la sortie de la zone de séchage à une installation de granulation et que l'on granule en présence d'eau de cristallisation libre et/ou de perborate et qu'en cas de nécessité, sèche le granulé.

2. Procédé selon la revendication 1, caractérisé en ce que l'on sèche les gouttelettes pulvérisées avec de l'air, dans lequel on conduit celles-ci essentiellement en courant parallèle avec les gouttelettes de liquide pulvérisées et que l'on ajuste la température de l'air d'amenée à 60-250°C, de préférence à 90-200°C et la température de l'air d'évacuation à 50-200°C, de préférence à 50-100°C, en particulier à 60-90°C.

3. Procédé selon la revendication 1 ou 2, caractérisé en ce que l'on ajuste la température du matériau à granuler dans l'installation de granulation à environ 50°C à 90°C, ceci s'effectuant à l'aide d'air réchauffé à 60 à 130°C et/ou à l'aide de chauffage de contact.

4. Procédé selon une ou plusieurs des revendications 1 à 3, caractérisé en ce que l'on asperge les particules primaires après la sortie de la zone de séchage, avec de l'eau ou avec une solution aqueuse contenant un agent auxiliaire de granulation ou avec des produits de fusion, et, en même temps on effectue la granulation et le cas échéant en même temps ou consécutivement on diminue par séchage la teneur en eau libre et/ou liée.

5. Procédé selon une ou plusieurs des revendications 1 à 4, caractérisé en ce que l'on effectue la granulation des particules primaires en présence de perborate de sodium avec une teneur en eau de cristallisation supérieure à 25% en poids à une température de 50 à 90°C, de préférence de 60 à 75°C.

6. Procédé selon une ou plusieurs des revendications 1 à 5, caractérisé en ce que l'on exécute le séchage par atomisation et la granulation dans un séchoir par atomisation avec un lit tourbillonnant intégré, dans lequel la température de l'air d'amenée de fluidisation s'élève à 60-130°C, de préférence à 60-90°C.

7. Procédé selon une ou plusieurs des revendications 1 à 6, caractérisé en ce que l'on obtient la solution qui doit être amenée au séchage par atomisation immédiatement avant la pulvérisation, par réunion d'une solution aqueuse de peroxyde d'hydrogène — de préférence une de celles qui ont une teneur en $H_2O_2$ entre 30 et 85% en poids, avec une solution ou suspension aqueuse de métaborate de sodium ayant une teneur de 15 à 70% en poids, de préférence de 15 à 40% en poids de $BO_2Na$, pour laquelle le rapport molaire $H_2O_2/BO_2Na$ s'élève à 0,9-1,1 et de préférence de 1,0-1,05.

8. Procédé selon une ou plusieurs des revendications 1 à 7, caractérisé en ce que la solution qui doit être amenée au séchage par atomisation, possède une concentration allant de 5 à 50% en poids — de préférence de 10 à 40% en poids — de perborate — calculée comme $BO_2Na$.

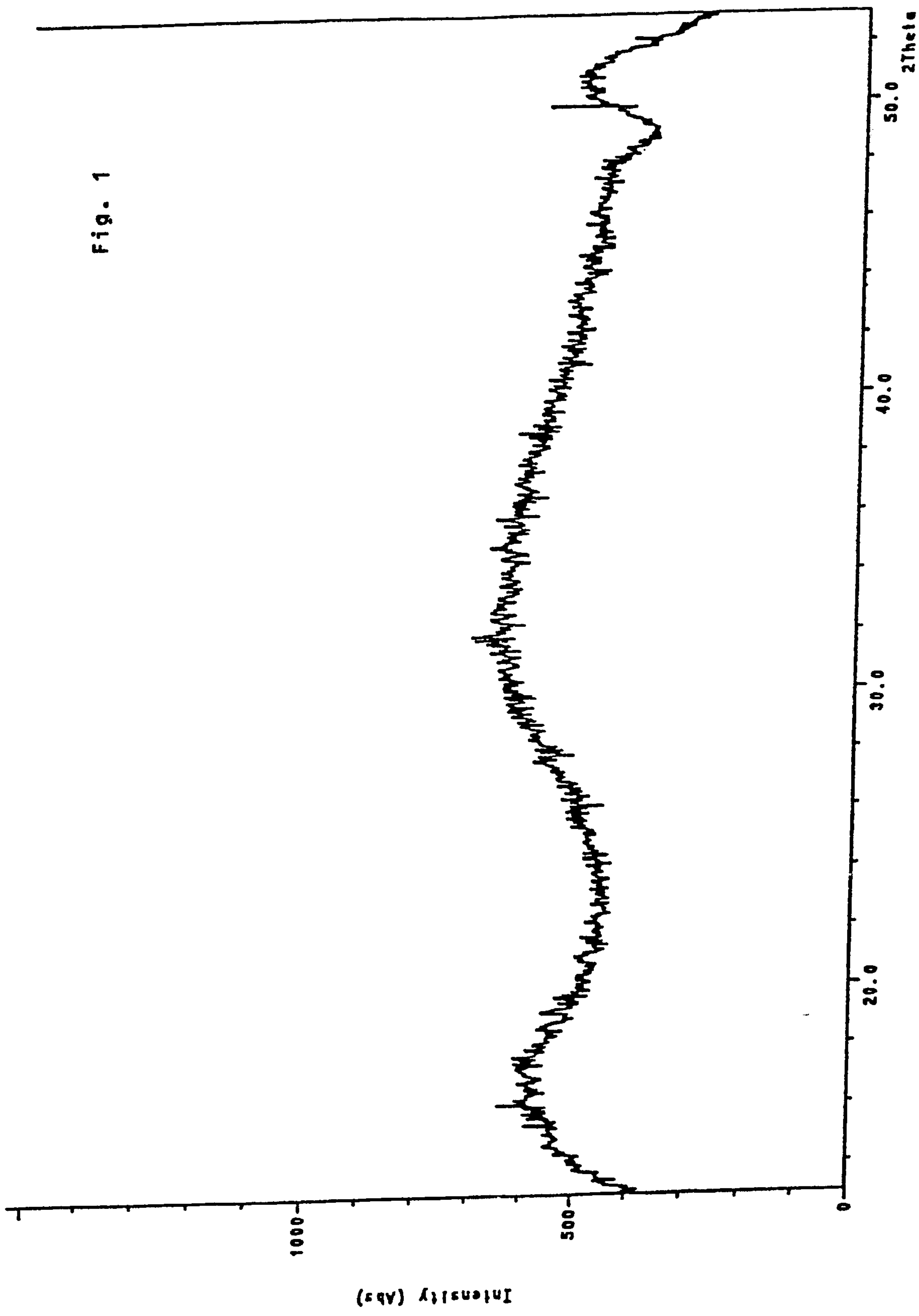


Fig. 1

Fig. 2